# EUROPÄISCHE PATENTANMELDUNG

(11) **EP 4 386 975 A1**
(43) Veröffentlichungstag der Anmeldung: **19.06.2024**
(21) Anmeldenummer: 23193903.4
(22) Anmeldetag: 29.08.2023
(51) Int. Cl.: H01P 3/12, H01P 11/00, B64C 1/06

(54) **BAUTEIL MIT HOHLLEITER, DATENÜBERTRAGUNGSSYSTEM UND LUFTFAHRZEUG**

(30) Priorität: 14.12.2022 DE 102022133280
(71) Anmelder: Airbus Operations GmbH, 21129 Hamburg (DE)
(72) Erfinder: HEGENBART, Matthias, 21129 Hamburg (DE); LINDE, Peter, 21129 Hamburg (DE)
(74) Vertreter: Isarpatent

(57) **Zusammenfassung**

Die vorliegende Erfindung schafft ein Bauteil (100) mit einem Hohlleiter (110), wobei das Bauteil (100) eine längliche Form aufweist, wobei das Bauteil (100) mindestens ein Versteifungselement (120) aufweist, welches dazu ausgebildet ist, eine strukturelle Integrität einer das Bauteil (100) umfassenden Struktur zu verstärken, wobei der Hohlleiter (110) entlang des Bauteils (100) einen Hohlraum (111) definiert, in welchem sich elektromagnetische Wellen im Wesentlichen verlustfrei ausbreiten können, und wobei der Hohlleiter (110) mindestens eine Öffnung (112) aufweist, durch welche der Hohlraum (111) zugänglich ist. Des Weiteren schafft die vorliegende Erfindung ein Datenübertragungssystem (10) und ein Luftfahrzeug.

## Beschreibung

### TECHNISCHES GEBIET DER ERFINDUNG

Die vorliegende Erfindung betrifft ein Bauteil mit einem Hohlleiter, ein Datenübertragungssystem, sowie ein Luftfahrzeug.

### HINTERGRUND DER ERFINDUNG

In Luftfahrzeugen wird ein möglichst geringes Gewicht der Gesamtkonstruktion angestrebt. Dementsprechend hat sich in diesem Feld eine Leichtbauweise etabliert, in welcher Strukturkomponenten wie Rumpf und Flügel zunächst möglichst dünn und dadurch leicht ausgebildet und dann durch strategische Platzierung von Verstärkungsbauteilen, wie Stringer und Spante, verstärkt wird.

Zusätzlich finden sich in Luftfahrzeugen auch eine Vielzahl an elektronischen Komponenten, welche zum einen mit Energie als auch mit Steuersignalen versorgt werden müssen. Hierfür sind derzeit generell Kabelverbindungen vorgesehen, welche aufgrund der hohen Anzahl an benötigten Kabeln wesentlich zum Gesamtgewicht des Luftfahrzeugs beitragen.

### ZUSAMMENFASSUNG DER ERFINDUNG

Vor diesem Hintergrund liegt der vorliegenden Erfindung die Aufgabe zu Grunde, die benötigte Anzahl an Kabeln in einer Konstruktion, insbesondere einem Luftfahrzeug, zu reduzieren.

Diese Aufgabe wird gelöst durch ein Bauteil mit den Merkmalen des Patentanspruchs 1, ein Datenübertragungssystem mit den Merkmalen des Patentanspruchs 6 sowie durch ein Luftfahrzeug mit den Merkmalen des Patentanspruchs 7.

Dementsprechend ist nach einem ersten Aspekt der Erfindung ein Bauteil mit einem Hohlleiter vorgesehen. Das Bauteil weist eine längliche Form auf. Das Bauteil weist weiterhin mindestens ein Versteifungselement auf, welches dazu ausgebildet ist, eine strukturelle Integrität einer das Bauteil umfassenden Struktur zu verstärken. Der Hohlleiter definiert entlang des Bauteils einen Hohlraum, in welchem sich elektromagnetische Wellen im Wesentlichen verlustfrei ausbreiten können. Der Hohlleiter weist weiterhin mindestens eine Öffnung auf, durch welche der Hohlraum zugänglich ist.

Nach einem zweiten Aspekt der Erfindung ist ein Datenübertragungssystem mit einem erfindungsgemäßen Bauteil und einer Vielzahl an Transceivern vorgesehen. Die Transceiver sind derart an dem Bauteil befestigt, dass jeder der Vielzahl an Transceivern elektromagnetische Wellen in den Hohlraum einspeisen kann und/oder sich in dem Hohlraum ausbreitende elektromagnetische Wellen empfangen kann.

Nach einem weiteren Aspekt der Erfindung ist ein Luftfahrzeug mit mindestens einem erfindungsgemäßen Bauteil oder mindestens einem erfindungsgemäßen Datenübertragungssystem vorgesehen.

Eine der Ideen der vorliegenden Erfindung besteht darin, elektromagnetische Wellen als Datenübertragungsmedium zu verwenden.

Eine Verwendung von elektromagnetischen Wellen zu kabellosen Übertragung von Steuersignalen ist prinzipiell dazu geeignet, Kabel und damit Gewicht einzusparen. Eine freie Ausbreitung elektromagnetischer Wellen sollte jedoch vermieden werden, da hierdurch die Möglichkeit besteht, dass elektronische Komponenten durch nicht für sie gedachte Signale beeinflusst werden könnten. Durch die Verwendung eines Hohlleiters, in welchem sich die elektromagnetischen Wellen verlustfrei ausbreiten ohne in die Umgebung zu entkommen unterbindet solche Quereinflüsse. Die Verwendung von Bauteilen zur Erhöhung der Steifigkeit, welche insbesondere in Luftfahrzeugen an vielen Stellen bereits vorgesehen werden ergibt den synergistischen Effekt, dass die Hohlleiter angeordnet werden können, ohne weitere, das Gewicht erhöhende, Bauteil zu benötigen.

Gemäß einer Weiterbildung ist das Bauteil aus Metall oder einem mit Metall überzogenen Verbundbaustoff gefertigt ist. Es kann jedoch auch möglich sein, dass nicht das gesamte Bauteil sondern lediglich der Hohlleiter derart gefertigt ist. Diese Materialien besitzen jeweils eigene vorteilhafte Aspekte, welche in den detaillierten Ausführungsformen der Figuren näher erläutert werden.

Gemäß eines weiteren Ausführungsbeispiels des Bauteils wird mindestens eine den Hohlraum definierende Wand des Hohlleiters durch das mindestens eine Versteifungselement gebildet. Hierdurch lässt sich vorteilhaft synergistisch Material einsparen und das Gewicht des Bauteils noch weiter reduzieren.

Gemäß eines weiteren Ausführungsbeispiels des Bauteils ist die mindestens eine Öffnung als Schlitz ausgebildet, welcher sich in Längsrichtung entlang des Hohlleiters erstreckt. Hierdurch ergibt sich die vorteilhafte Möglichkeit, die letztendliche Position von Transceivern zur Datenübertragung völlig frei zu wählen.

Gemäß einer Weiterbildung weist das Bauteil mindestens eine Befestigungseinrichtung auf, mit welcher sich ein Transceiver derart an dem Bauteil befestigen lässt, dass der Transceiver elektromagnetische Wellen in den Hohlraum einspeisen kann und/oder sich in dem Hohlraum ausbreitende elektromagnetische Wellen empfangen kann. Hierdurch wird die spätere Anbringung von Transceivern zur Datenübertragung vorteilhaft vereinfacht.

In einem Ausführungsbeispiel des Luftfahrzeugs ist das mindestens eine Bauteil mit einem Rumpf, einem Kabinenboden und/oder mindestens einem Flügel des Luftfahrzeugs verbunden. Bei diesen Strukturelementen eines Luftfahrzeugs sind in der Regel eine Vielzahl von strukturfestigenden Bauteilen vorgesehen, was die Anordnung eines Bauteils mit Datenübertragungsfunktion an diesen Stellen besonders synergistisch vorteilhaft macht.

Nach einem weiteren Ausführungsbeispiel des Luftfahrzeugs ist das mindestens eine Bauteil als Sitzschiene, Stringer, insbesondere Z-Stringer, Spant, insbesondere Z-Spant, und/oder Doppel-T-Träger ausgebildet. Diese speziellen Ausführungsformen von Bauteilen sind je nach gewünschter Anordnung des Bauteils jeweils besonders vorteilhaft.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeugs gemäß eines Ausführungsbeispiels der vorliegenden Erfindung;
- Fig. 2a: eine schematische Draufsicht eines Bauteils gemäß eines Ausführungsbeispiels der vorliegenden Erfindung;
- Fig. 2b: eine schematische Querschnittansicht des Bauteils gemäß des Ausführungsbeispiels in Fig. 2a;
- Fig. 3a: eine schematische Draufsicht eines Datenübertragungssystems gemäß eines Ausführungsbeispiels der vorliegenden Erfindung;
- Fig. 3b: eine schematische Querschnittansicht des Datenübertragungssystems gemäß des Ausführungsbeispiels in Fig. 3a;
- Fig. 4a: eine schematische Querschnittansicht eines Bauteils gemäß einer Ausführungsform der vorliegenden Erfindung;
- Fig. 4b: eine schematische Querschnittansicht eines Bauteils gemäß einer Ausführungsform der vorliegenden Erfindung;
- Fig. 4c: eine schematische Querschnittansicht eines Bauteils gemäß einer Ausführungsform der vorliegenden Erfindung;
- Fig. 4d: eine schematische Querschnittansicht eines Bauteils gemäß einer Ausführungsform der vorliegenden Erfindung; und
- Fig. 4e: eine schematische Querschnittansicht eines Bauteils gemäß einer Ausführungsform der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

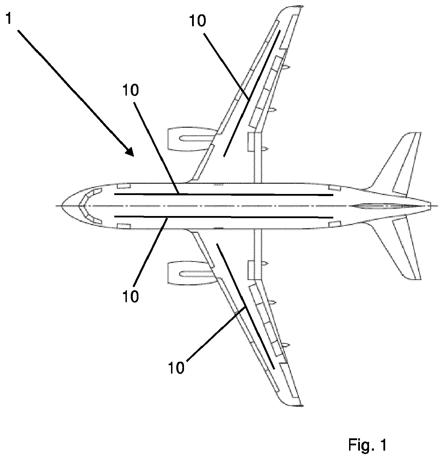

Fig. 1 zeigt eine schematische Darstellung eines Luftfahrzeugs 1 gemäß eines Ausführungsbeispiels der vorliegenden Erfindung.

Das in Figur 1 gezeigte Luftfahrzeug 1 weist eine Vielzahl von Datenübertragungssystemen 10 auf, von denen insgesamt vier gezeigt sind. Zwei Datenübertragungssysteme 10 verlaufen hierbei entlang des Rumpfes des Luftfahrzeugs 1 und jeweils ein Datenübertragungssystem 10 verläuft längs jedes der Flügel des Luftfahrzeugs 1.

Die Positionen der in Figur 1 gezeigten Datenübertragungssysteme 10 deuten an, an welchen Stellen in einem Luftfahrzeug beispielsweise strukturversteifende Bauteile angeordnet sein können. An diesen Stellen können also auch erfindungsgemäße Datenübertragungssysteme Anwendung finden um die im allgemeinen Teil beschriebenen synergistischen Effekte der vorliegenden Erfindung bestmöglich nutzen zu können.

Bei dem in Figur 1 gezeigten Luftfahrzeug sind Datenübertragungssysteme 10 genannt. Es ist allerdings auch denkbar, dass ein Luftfahrzeug 1 lediglich erfindungsgemäße Bauteile aufweist, falls etwa durch das Hinzufügen von Transceivern, die Bauteile erst nachträglich zu Datenübertragungssystemen ergänzt werden sollen.

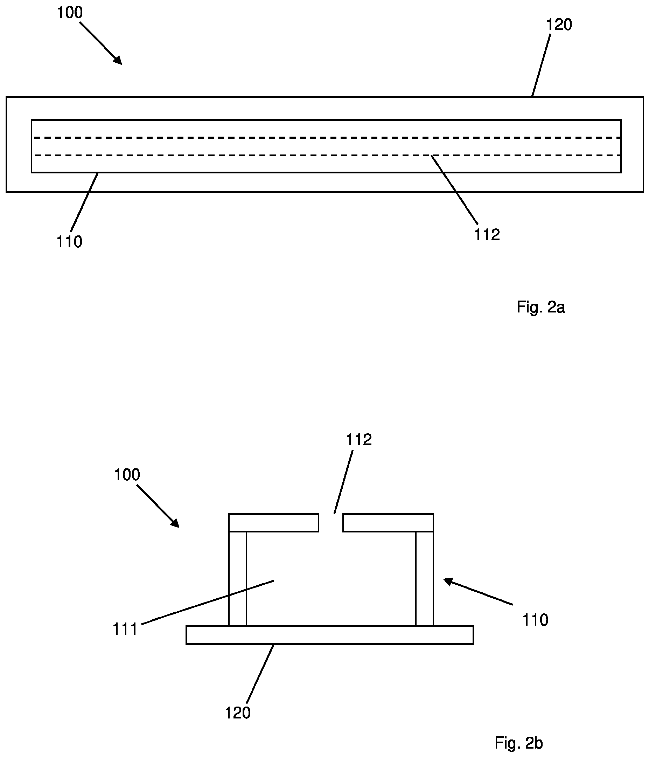

Fig. 2a und 2b zeigen schematische Darstellungen eines Bauteils 100 gemäß eines Ausführungsbeispiels der vorliegenden Erfindung, wobei Fig. 2a eine Draufsicht und Fig. 2b eine Querschnittsansicht des Bauteils 100 zeigt.

Das Bauteil 100 ist mit einer länglichen Form ausgebildet und weist einen Hohlleiter 110 und ein Versteifungselement 120 auf. Der Hohlleiter 110 definiert einen Hohlraum 111 und weist eine Öffnung 112 auf. Das Versteifungselement 120 ist als Platte ausgebildet.

Das Versteifungselement 120 kann an einer Oberfläche einer Struktur befestigt werden. Daraus resultiert eine lokal höhere Dicke der sich daraus ergebenden Gesamtstruktur, welche daher an dieser Stelle eine höhere Steifigkeit aufweist.

Der Hohlleiter 110 umfasst zwei Schienen, welche rechtwinklig abgeknickt sind und zusammen mit einem Teilbereich des Versteifungselements 120 einen rechteckigen Rahmen definieren, durch den der Hohlraum 111 definiert wird. Die Öffnung 112 ist in dem gezeigten Ausführungsbeispiel als Spalt ausgebildet, welcher sich entlang des Hohlleiters 110 erstreckt.

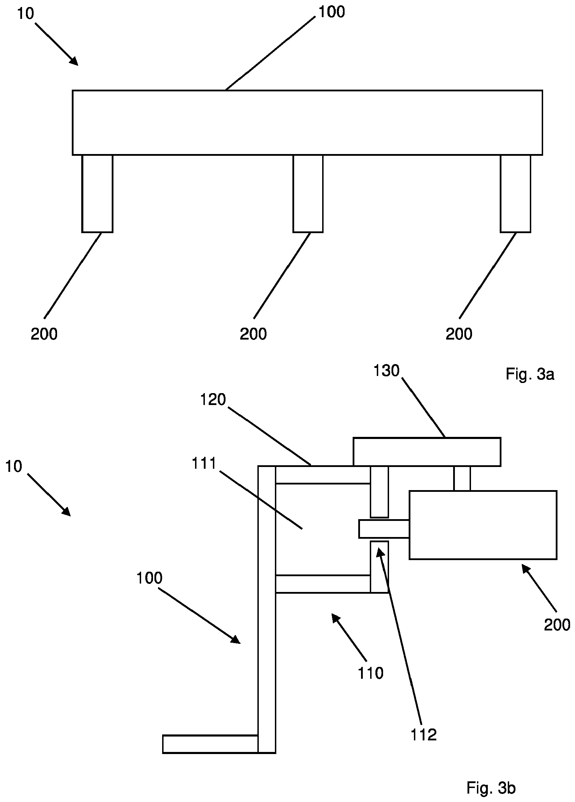

Durch Auswahl geeigneter Materialien des Bauteils, insbesondere des Hohlleiters 110 und aller Teilbereiche, welche dazu beitragen den Hohlraum 111 zu definieren, wird ermöglicht, dass sich elektromagnetische Wellen innerhalb des Hohlraums verlustfrei ausbreiten können. Unter "verlustfrei" ist hier zu verstehen, dass zum einen die Intensität der elektromagnetischen Wellen bei der Ausbreitung durch den Hohlleiter nicht abnimmt, aber auch zugleich, dass kein Anteil der sich ausbreitenden elektromagnetischen Wellen sich außerhalb des Hohlleiters ausbreitet. Durch geeignete Ausbildung der Ausmaße der Öffnung 112, kann dies gewährleistet werden und gleichzeitig ein Zugang zum Hohlraum 111 für etwa Transceiver ermöglicht werden, wie in Bezug auf die Fig. 3a und 3b näher erläutert.

Als Materialien für den Hohlleiter 110 bzw. das Bauteil 100 sind beispielsweise Metalle und mit Metall überzogene Verbundbaustoffe besonders vorteilhaft. Reine Metalle lassen sich vorteilhaft leicht formen, was den Fertigungsprozess des Bauteils 100 erleichtert. Insbesondere wenn der Hohlleiter 110 als separates Element ausgebildet wird, welches mit dem Rest des Bauteils 100 nach dessen Fertigung verbunden wird. Mit Metall überzogene Verbundbaustoffe weisen ein vorteilhaft geringes Gewicht auf.

Fig. 3a und 3b zeigen schematische Darstellungen eines Datenübertragungssystems 10 gemäß eines Ausführungsbeispiels der vorliegenden Erfindung, wobei Fig. 3a eine Draufsicht und Fig. 3b eine Querschnittsansicht des Datenübertragungssystems 10 zeigt.

Das Datenübertragungssystem 10 weist ein Bauteil 100 und eine Vielzahl an Transceivern 200 auf. In dem hier gezeigten Ausführungsbeispiel sind insgesamt drei Transceiver 200 vorgesehen, zwei Transceiver 200jeweils an den Enden des Bauteils 100 und ein Transceiver 200 an einer zentralen Stelle. Das Bauteil 100 ist als sogenannter Z-Stringer ausgebildet. Das Bauteil 100 weist zwei parallele Platten auf, welche durch eine senkrecht zu diesen angeordnete Platte verbunden werden. Eine der Platten dient hierbei als Versteifungselement 120. Der Hohlleiter 110 weist zwei Schienen auf, von denen eine rechtwinklig abgeknickt sind und zusammen mit dem Versteifungselement 120 und einem Teilbereich der senkrechten Verbindungsplatte einen rechteckigen Rahmen bilden, durch welchen der Hohlraum 111 definiert wird. Aus den Darstellungen der Figuren 3a und 3b geht nicht eindeutig hervor, wie die mindestens eine Öffnung 112 ausgebildet ist. Es ist möglich, dass wie in dem Ausführungsbeispiel der Figuren 2a und 2b ein einzelner Spalt vorgesehen ist. Es ist aber auch möglich, dass an jeder der Positionen der Transceiver 200 ein entsprechendes Loch vorgesehen ist. Die Transceiver 200 sind mit einer Befestigungseinrichtung 130 verbunden, welche ihrerseits mit dem Versteifungselement 120 verbunden ist. Ein schmaler Teil des Transceivers 200 ragt durch die Öffnung 112 in den Hohlraum 111 hinein. Dies ermöglicht dem Transceiver 200 elektromagnetische Wellen in den Hohlleiter 110 einzuspeisen bzw. sich in dem Hohlleiter 110 ausbreitende elektromagnetische Wellen zu empfangen.

In den Fig. 3a und 3b wird nicht explizit gezeigt, wie die Transceiver 200 mit der Befestigungseinrichtung 130 verbunden sind, da es hierfür eine große Vielzahl an Möglichkeiten gibt. So können etwa Schrauben, Nieten oder Klebmittel für die Befestigung verwendet werden. Auch sind Steckverbindungen denkbar.

Die hier gezeigten Transceiver 200 sind sowohl zum Aussenden als auch zum Empfangen von elektromagnetischen Wellen ausgebildet. Bei einem Datenübertragungssystem 10 ist es jedoch auch denkbar, dass einige der Transceiver 200 lediglich elektromagnetische Wellen aussenden und andere der Transceiver 200 lediglich elektromagnetische Wellen empfangen. Eine derartige Konfiguration eines Datenübertragungssystems 10 mit dezidierten Sendern und Empfängern an Stelle der hier gezeigten Transceiver ist von der vorliegenden Erfindung ebenfalls umfasst, lediglich aus Gründen der Übersichtlichkeit wird eine derartige Konfiguration in dieser Anmeldung auch als Konfiguration mit mehreren Transceivern 200 bezeichnet.

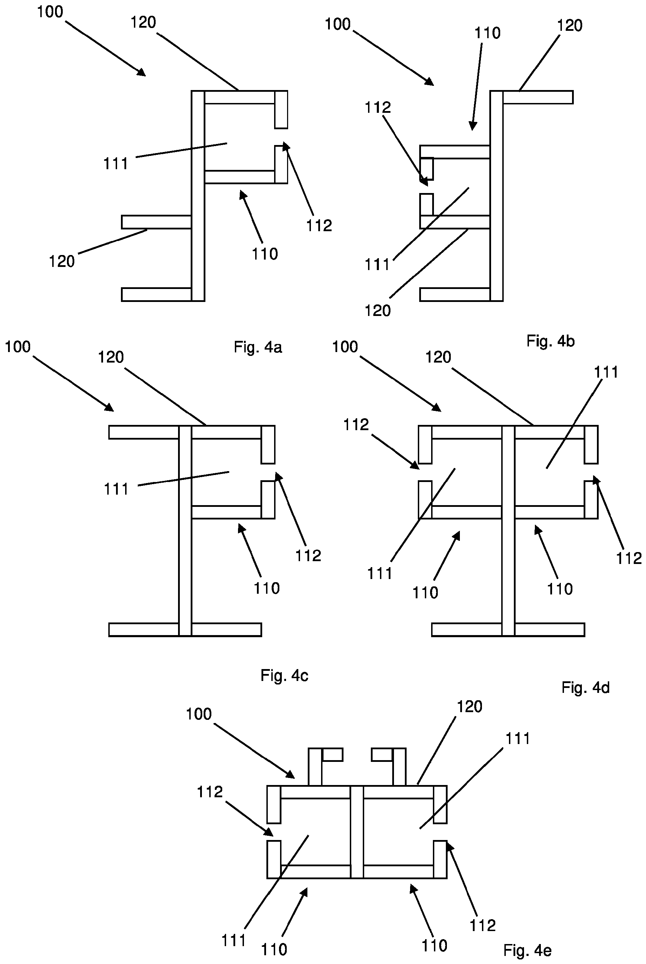

Fig. 4a bis 4e zeigen jeweils eine schematische Querschnittansicht eines Bauteils 100 gemäß verschiedener Ausführungsbeispiele der vorliegenden Erfindung.

Fig. 4a und 4b zeigen jeweils ein Bauteil 100, welches als sogenannter Z-Spant ausgebildet ist. Das jeweilige Bauteil 100 weist zwei parallele Platten auf, welche durch eine senkrecht zu diesen angeordnete Platte verbunden werden und dadurch eine Z-Form bilden. Entlang der senkrechten Platte ist eine weitere, zu dieser senkrechten, Platte ausgebildet, welche in entgegengesetzter Richtung zu der oberen der beiden parallelen Platten angeordnet ist und zusammen mit dieser jeweils als Versteifungselement 120 dient. Der Hohlleiter 110 weist jeweils eine Öffnung 112 auf.

In Fig. 4a ist der Hohlleiter 110 derart angeordnet, dass das obere Versteifungselement 120 eine Wand bildet, welche dazu beiträgt, den Hohlraum 111 zu definieren. In Fig. 4b ist der Hohlleiter 110 derart angeordnet, dass das mittlere Versteifungselement 120 eine Wand bildet, welche dazu beiträgt, den Hohlraum 111 zu definieren. Diese beiden Ausführungsformen können auch derart kombiniert werden, dass ein Bauteil 100 entsteht, welches zwei Hohlleiter 110 aufweist.

Fig. 4c und 4d zeigen jeweils ein Bauteil 100, welches als sogenannter Doppel-T-Träger ausgebildet ist. Das jeweilige Bauteil 100 weist zwei parallele Platten auf, welche durch eine senkrecht zu diesen angeordnete Platte derart verbunden werden, dass beide der parallelen Platten zusammen mit der senkrechten Verbindungsplatte ein T-Profil bilden. Die obere der beiden parallelen Platten dient hierbei als Versteifungselement 120.

In dem in Fig. 4c gezeigten Ausführungsbeispiel weist das Bauteil 100 einen Hohlleiter 110 auf, welcher auf einer Seite des oberen T-Profils derart angeordnet ist, dass ein Teilbereich des Versteifungselementes 120 eine Wand bildet, welche dazu beiträgt, den Hohlraum 111 zu definieren. In dem in Fig. 4c gezeigten Ausführungsbeispiel weist das Bauteil 100 zwei Hohlleiter 110 auf, welche jeweils auf einer Seite des oberen T-Profils derart angeordnet sind, dass jeweils ein Teilbereich des Versteifungselementes 120 eine Wand bildet, welche dazu beiträgt, den jeweiligen Hohlraum 111 zu definieren. Jeder der in Fig. 4c und 4d gezeigten Hohlleiter weist eine Öffnung 112 auf.

Fig. 4e zeigt ein Bauteil 100, welches als Sitzschiene ausgebildet ist. Das in Fig. 4e gezeigte Bauteil 100 ist im Wesentlichen wie das in Fig. 4d gezeigte Bauteil 100 ausgebildet, mit dem Unterschied, dass die beiden Hohlleiter 110 jeweils so angeordnet sind, dass Teilbereiche der zu dem Versteifungselement 120 parallel angeordneten Grundplatte ebenfalls Wände bilden, welche dazu beitragen, den jeweiligen Hohlraum zu definieren. Auf der Oberseite des Versteifungselements 120 ist ebenfalls eine Schiene ausgebildet, in welcher Sitze angebracht werden können.

Die Ausführungsbeispiele der Fig. 4a bis 4e geben einen Überblick über die Vielzahl an Möglichkeiten, wie die vorliegende Erfindung zum Einsatz kommen kann.

In den gezeigten Ausführungsbeispielen wurden die Bauteile derart beschrieben, dass sie aus mehreren separaten Einzelelementen zusammengesetzt sind. Ein Bauteil im Sinne der vorliegenden Erfindung können allerdings auch integral einstückig ausgebildet sein. Insbesondere kann der Hohlleiter als separates Bauteil vorgesehen sein, mit welchem sich bereits existierende Bauteil nachrüsten lassen oder der Hohlleiter kann bereits während der Fertigung des Bauteils integral mit diesem geformt werden.

In dieser Anmeldung wurde die vorliegende Erfindung im Kontext eines Luftfahrzeuges beschreiben. Die hier beschriebenen Bauteile und Datenübertragungssysteme lassen sich jedoch in allen Bereichen einsetzen. In welchen strukturfestigende Bauteile und Datenübertragungsleitungen vorgesehen werden, insbesondere in allen Arten von Land-, Wasser- und Raumfahrzeugen.

### BEZUGSZEICHENLISTE

- 1: Luftfahrzeug
- 10: Datenübertragungssystem
- 100: Bauteil
- 110: Hohlleiter
- 111: Hohlraum
- 112: Öffnung
- 120: Versteifungselement
- 130: Befestigungseinrichtung
- 200: Transceiver

## Patentansprüche

1. Bauteil (100) mit einem Hohlleiter (110),
wobei das Bauteil (100) eine längliche Form aufweist,
wobei das Bauteil (100) mindestens ein Versteifungselement (120) aufweist, welches dazu ausgebildet ist, eine strukturelle Integrität einer das Bauteil (100) umfassenden Struktur zu verstärken,
wobei der Hohlleiter (110) entlang des Bauteils (100) einen Hohlraum (111) definiert, in welchem sich elektromagnetische Wellen im Wesentlichen verlustfrei ausbreiten können, und
wobei der Hohlleiter (110) mindestens eine Öffnung (112) aufweist, durch welche der Hohlraum (111) zugänglich ist.

2. Bauteil (100) nach Anspruch 1, wobei das Bauteil (100), insbesondere lediglich der Hohlleiter (110), aus Metall oder einem mit Metall überzogenen Verbundbaustoff gefertigt ist.

3. Bauteil (100) nach einem der Ansprüche 1 oder 2, wobei mindestens eine den Hohlraum (111) definierende Wand des Hohlleiters (110) durch das mindestens eine Versteifungselement (110) gebildet wird

4. Bauteil (100) nach einem der Ansprüche 1 bis 3, wobei die mindestens eine Öffnung (112) als Schlitz ausgebildet ist, welcher sich in Längsrichtung entlang des Hohlleiters (110) erstreckt.

5. Bauteil (100) nach einem der Ansprüche 1 bis 4, wobei das Bauteil (100) mindestens eine Befestigungseinrichtung (130) aufweist, mit welcher sich ein Transceiver (200) derart an dem Bauteil (100) befestigen lässt, dass der Transceiver (200) elektromagnetische Wellen in den Hohlraum (111) einspeisen kann und/oder sich in dem Hohlraum (111) ausbreitende elektromagnetische Wellen empfangen kann.

6. Datenübertragungssystem (10) mit einem Bauteil (100) nach Anspruch 5 und einer Vielzahl an Transceivern (200), welche derart an dem Bauteil (100) befestigt sind, dass jeder der Vielzahl an Transceivern (200) elektromagnetische Wellen in den Hohlraum (111) einspeisen kann und/oder sich in dem Hohlraum (111) ausbreitende elektromagnetische Wellen empfangen kann.

7. Luftfahrzeug (1) mit mindestens einem Bauteil (100) nach einem der Ansprüche 1 bis 5 oder mindestens einem Datenübertragungssystem (10) nach Anspruch 6.

8. Luftfahrzeug (1) nach Anspruch 7, wobei das mindestens eine Bauteil (100) mit einem Rumpf, einem Kabinenboden und/oder mindestens einem Flügel des Luftfahrzeugs verbunden ist.

9. Luftfahrzeug (1) nach Anspruch 8, wobei das mindestens eine Bauteil (100) als Sitzschiene, Stringer, insbesondere Z-Stringer, Spant, insbesondere Z-Spant, und/oder Doppel-T-Träger ausgebildet ist.
